# EUROPEAN PATENT APPLICATION

(11) **EP 1 791 283 A1**
(43) Date of publication of application: **30.05.2007**
(21) Application number: 05787997.5
(22) Date of filing: 28.09.2005
(51) Int. Cl.: H04J 11/00

(54) **TRANSMITTING APPARATUS, RECEIVING APPARATUS, COMMUNICATION SYSTEM AND COMMUNICATION METHOD**

(30) Priority: 29.09.2004 CN 200410011780
(71) Applicant: MATSUSHITA ELECTRIC INDUSTRIAL CO., LTD., Osaka 571-8501 (JP)
(72) Inventor: LI, Jifeng, Panasonic R&D Center China Co.,Ltd.,, Haidian District, Beijing 100080 (CN); YU, Xiachong, Panasonic R&D Center China Co.,Ltd.,, Haidian District, Beijing 100080 (CN)
(74) Representative: Grünecker, Kinkeldey, Stockmair & Schwanhäusser Anwaltssozietät
(86) International application number: PCT/JP2005/017893
(87) International publication number: WO 2006/035841

(57) **Abstract**

A receiving apparatus that can effectively use spectra to improve the interference resistance and the information transmission efficiency. In this apparatus, a channel estimating part (1006) uses a pilot received from the transmitting end to perform a channel estimation for each of subcarrier groups. A subcarrier group performance analyzer (1011) calculates, based on a channel estimation result, the SIR value of each subcarrier group. A control command generating part (1012) uses the SIR value of each subcarrier group to generate the puncture information and rate of the subcarrier group, then stores the generated puncture information and rate so as to perform an appropriate process when an S/P converting part (1005) performs an S/P conversion for next received information, and then feeds the generated puncture information and rate back to a transmitting apparatus.

## Description

### Technical Field

The present invention relates to a transmission apparatus, reception apparatus, communication system and communication method, and, for example, to a transmission apparatus, reception apparatus, communicationsystemand communication method that adaptively control rates of subcarrier groups in a subcarrier communication system.

### Background Art

At present, in mobile communications, with the development of theories and technologies, many new technologies and applications such as orthogonal frequency division multiplexing (OFDM) and MIMO are emerging. These new technologies have an advantage of improving the performance of a mobile communication system substantially and satisfying requirements of radio multimedia and high rate data transmissions. For example, with OFDM, it is possible to improve spectral utilization efficiency by dividing a channel into many subchannels orthogonal to each other in a frequency domain and overlapping carrier spectra of the subchannels each other. Furthermore, the signal band of each subchannel is smaller than the channel band, and even if the whole channel has frequency selectivity, each subchannel is relatively flat, and, therefore, interference between symbols (ISI) decreases considerably. The main advantages of OFDM includes, for example, providing signals that do not interfere with each other, being not sensitive to multipath fading and a Doppler shift, providing no interference between users and between neighboring cells, and realizing a single-band receiver at low cost. On the other hand, a main disadvantage of OFDM is that power efficiency is low. OFDM has an advantage of being resistant to multipath and having high spectral utilization efficiency, so that it is suitable for high-rate radio transmissions.

A transmission apparatus of a conventional OFDM system includes, for example: coding section 101; interleaving section 102; modulation section 103; pilot insertion section 104; S/P conversion section 105; inverse Fourier transform (hereinafter referred to as "IFFT") section 106; guard interval insertion and window setting section 107; D/A conversion (DAC) section 108; and transmitter (RFTX) 109. Among them, pilot insertion is performed for channel estimation and a channel estimation result can be used for calculating an SIR value of a subcarrier. A reception apparatus of the OFDM system further includes parts corresponding to transmission, and, in addition, parts for channel estimation and information feedback. That is, the reception apparatus includes, for example: receiver (RFRX) 111; A/D conversion (ADC) section 112; guard interval removal section 113; fast Fourier transform (hereinafter referred to as "FFT") section 114; P/S conversion section 115; channel estimation section 116; demodulation section 117; deinterleaving section 118: and decoding section 119.

Of all carriers of OFDM, generally, fading of 1% of subcarriers is lower by 20 dB than an average carrier, and fading of 0.1% of carriers is lower by 30 dB than an average carrier. The system performance declines due to fading of intensity of these subcarriers. Therefore, when the rate for each subcarrier is adaptively controlled based on the SIR performance of the subcarrier channel, it is possible to optimize the system performance.

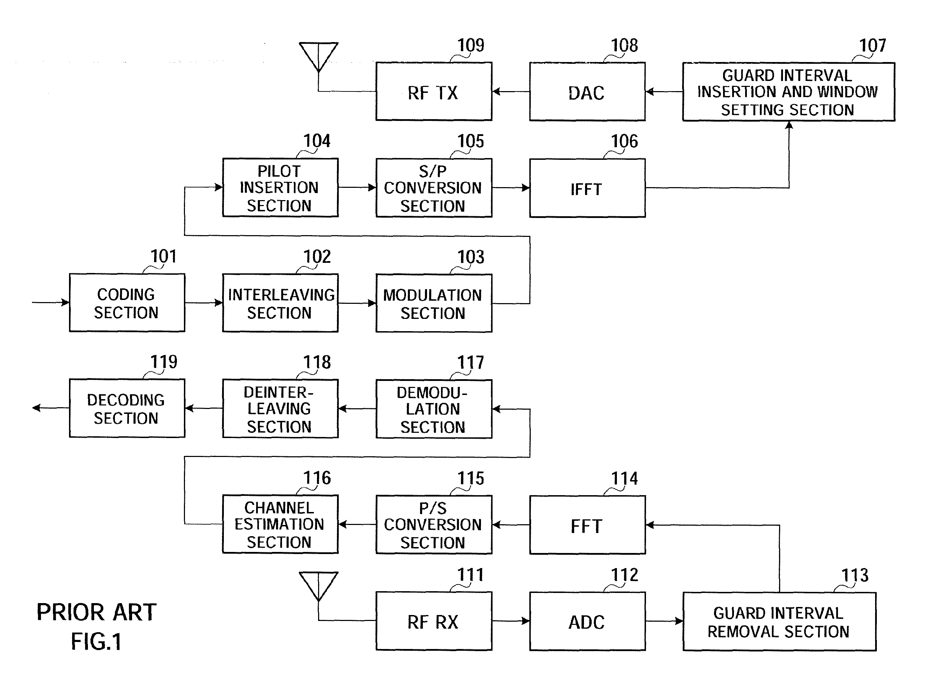

FIG. 1 is ablock diagram showing the configuration of a transmitter and receiver of a conventional OFDM system. In the transmission apparatus in FIG. 1, coding section 101 performs coding on information of a user. Interleaving section 102 performs interleaving on the coded information. Modulation section 103 modulates the information. Pilot insertion section 116 inserts pilots in the modulated information to perform channel estimation. S/P conversion section 105 performs S/P conversion. IFFT section 106 performs IFFT. Guard interval insertion and window setting section 107 inserts a guard interval in the modulated information and sets a window, thereby preventing interference between subcarriers. The information in which the guard interval is inserted is then transmitted from transmitter 109 after D/A conversion section 108.

In the reception apparatus, receiver 111 receives information transmitted from transmitter 109 and converts the information from a radio frequency to a baseband frequency. The converted information is subjected to FFT by FFT section 114 after A/D conversion section 112 and guard interval removal section 113. The information after FFT is input to channel estimator 116 via P/S conversion section 115. Channel estimator 116 then performs channel estimation. Based on the channel estimation result, the channel is compensated, and demodulation section 117 demodulates the information, deinterleaving section 118 performs deinterleaving and, finally, decoding section 119 decodes the information. After the decoding, the original data is obtained.

However, with a conventional OFDM system, it is general to adopt an identical transmission rate for all subcarriers and has a problem that differences in transmission performance among the subcarriers due to frequency selective fading are not considered. If a subcarrier having poor transmission performance adopts the same rate as the subcarriers having good performance, there is a problem that interference resistance performance of the subcarriers is degraded and the transmission efficiency is very low.

### Disclosure of Invention

### Problems to be Solved by the Invention

It is therefore an object of the present invention to provide a transmission apparatus, reception apparatus, communication system and communication method that are able to improve interference resistance performance and information transmission efficiency by making effective use of a spectrum.

### Means for Solving the Problem

The transmission apparatus of the present invention adopts a configuration including: a subcarrier selection section that generates a subcarrier selection signal for each of subcarrier groups and outputs the signal based on received subcarrier selection feedback information; a data assigning section that selects subcarriers necessary for each of the subcarrier groups based on the subcarrier selection signal of each of the subcarrier groups and assigns data to the selected subcarriers; an inverse fast Fourier transform section that performs an inverse fast Fourier transform on the data assigned to each of the subcarriers at the data assigning section; and a transmission section that transmits the data subjected to the inverse fast Fourier transform.

The reception apparatus of the present invention adopts a configuration including a reception section that receives data; a fast Fourier transform section that performs a fast Fourier transform on the data; a first P/S conversion section that performs a first P/S conversion on the data after the fast Fourier transform based on a first P/S conversion control signal, combines subcarriers of all data in the same carrier group after the first P/S conversion, and outputs each of the subcarrier groups after the combination; a plurality of channel estimation sections that perform channel estimation on each of the corresponding subcarrier groups after the first P/S conversion; a subcarrier group analyzer that analyzes the channel estimation result and calculates an SIR value of each of the subcarrier groups; a control instruction generation section that generates subcarrier selection feedback information based on the SIR value of each of the subcarrier groups and generates the first P/S conversion control signal based on the selection information on subcarriers of each of the subcarrier groups of the generated subcarrier selection feedback information; and a transmission section that transmits the subcarrier selection feedback information.

The communication system of the present invention is a communication system having a transmission apparatus for transmitting a signal and a reception apparatus for receiving a signal, the transmission apparatus having: a subcarrier selection section that generates a subcarrier selection signal of each of the subcarrier groups and outputs the signal based on received subcarrier selection feedback information; a data assigning section that selects subcarriers necessary for each of the subcarrier groups based on the subcarrier selection signal of each of the subcarrier groups and assigns data to the selected subcarriers; an inverse fast Fourier transform section that performs an inverse fast Fourier transform on the data assigned to each of the subcarriers by the data assigning section; and a transmission section that transmits the data subjected to the inverse fast Fourier transform, and the reception apparatus having:a reception section that receives data; a fast Fourier transform section that performs a fast Fourier transform on the data; a first P/S conversion section that performs a first P/S conversion on the data after the fast Fourier transform based on a first P/S conversion control signal, combines subcarriers of all data of the same carrier group after the first P/S conversion and outputs each of the subcarrier groups after the combination; a plurality of channel estimation sections that perform channel estimation on each of the corresponding subcarrier groups after the first P/S conversion; a subcarrier group analyzer that analyzes the channel estimation result and calculates an SIR value of each of the subcarrier groups; a control instruction generation section that generates subcarrier selection feedback information based on the SIR value of each of the subcarrier groups and generates the first P/S conversion control signal based on the selection information on subcarriers of each of the subcarrier groups of the subcarrier selection feedback information generated; and a transmission section that transmits a signal including the subcarrier selection feedback information.

The communication method of the present invention includes the steps of: at a reception apparatus, receiving data; performing a fast Fourier transform on the data;performing a first P/S conversion on the data after the fast Fourier transform based on a first P/S conversion control signal, combining subcarriers of all data of the same carrier group after the first P/S conversion and outputting each of the subcarrier groups after the combination; performing channel estimation on each of the corresponding subcarrier groups after the first P/S conversion; analyzing the channel estimation result and calculating an SIR value of each of the subcarrier groups; generating subcarrier selection feedback information based on the SIR value of each of the subcarrier groups and generating the first P/S conversion control signal based on subcarrier selection information in the generated subcarrier selection feedback information for each of the subcarrier groups; and transmitting the subcarrier selection feedback information, and at a transmission apparatus, receiving the subcarrier selection feedback information; generating a subcarrier selection signal of each of the subcarrier groups and outputting the signal based on the received subcarrier selection feedback information; selecting subcarriers necessary for each of the subcarrier groups based on the subcarrier selection signal of each of the subcarrier groups and assigning data to the selected subcarriers; applying an inverse fast Fourier transform to the data assigned to each of the subcarriers; and at the transmission apparatus, transmitting the data subjected to the inverse fast Fourier transform.

### Advantageous Effect of the Invention

According to the present invention, it is possible to improve the interference resistance performance and the information transmission efficiency by making effective use of a spectrum.

### Brief Description of Drawings

FIG.1 is a block diagram showing the configuration of a transmitter and receiver in a conventional OFDM system;
FIG.2 illustrates an influence of frequency selective fading on the transmission performance of subcarriers according to an embodiment of the present invention;
FIG.3 shows selecting average rates of subcarrier groups based on SIR values of the carrier groups according to the embodiment of the present invention;
FIG.4 shows selecting the number of subcarriers for the carrier groups based on SIR values of the groups according to the embodiment of the present invention;
FIG.5A shows an influence of frequency selective fading on the transmission performance of the subcarriers according to the embodiment of the present invention;
FIG.5B shows selecting average rates of subcarrier groups based on SIR values of the carrier groups according to the embodiment of the present invention;
FIG.5C shows selecting the number of subcarriers for the carrier groups based on SIR values of the carrier groups according to the embodiment of the present invention;
FIG.6A shows an influence of frequency selective fading on the transmission performance of the subcarriers according to the embodiment of the present invention;
FIG.6B shows selecting average rates of the subcarrier groups based on SIR values of the carrier group according to the embodiment of the present invention;
FIG.6C shows selecting the number of subcarriers for the carrier groups based on SIR values of the group according to the embodiment of the present invention;
FIG.7A shows an influence of frequency selective fading on the transmission performance of the subcarriers according to the embodiment of the present invention;
FIG.7B shows selecting average rates of the subcarrier groups based on SIR values of the carrier group according to the embodiment of the present invention;
FIG.7C shows selecting the number of subcarriers for the carrier group based on SIR values of the groups according to the embodiment of the present invention;
FIG.8 shows a block diagram showing the configuration of a transmission apparatus according to the embodiment of the present invention;
FIG.9 shows a flow chart showing a transmission method according to the embodiment of the present invention;
FIG.10 is a block diagram showing the configuration of a reception apparatus according to the embodiment of the present invention; and
FIG.11 is a flow chart showing a reception method according to the embodiment of the present invention.

### Best Mode for Carrying Out the Invention

Hereinafter, an embodiment of the present invention will be explained in detail with reference to the drawings.

### (Embodiment)

Puncturing is a method of changing an information transmission rate and efficiency. When, for example, puncturing is performed on a convolutional code having a coding rate of 1/2, assume that an output sequence of the convolutional code after interleaving is {A₁B₁A₂B₂A₃B₃ ···} and that 2 bits are deleted from every 6 bits output. The code then has a coding rate of 3/4 and the bit output after the puncturing becomes {A₁B₁A₂B₃A₄B₄A₅B₆A₇B₇A₈B₉···}. However, when 2 bits are deleted from every 4 bits output, the code has a coding rate of 2/3 and the bit output after the puncturing becomes {A₁B₁A₂A₃B₃A₄A₅B₅A₆ ··· }. For decoding, when 0 is inserted in a position where puncturing is performed, the decoding method by a code having a coding rate of 1/2 can be used as is. Therefore, through puncturing, it is possible to provide flexibility for coding and perform rate matching effectively, thereby enabling easier use. With the present invention, by grouping all subcarriers in an OFDM system and performing puncturing on subcarriers based on the transmission characteristic of each subcarrier group, it is possible to change the transmission rates of the subcarrier groups and effectively increase the spectral utilization efficiency. For example, assume that one subcarrier group adopts a puncturing table of (010110), "1" indicates that the subject subcarrier is selected to transmit data and "0" indicates that the subject subcarrier is not used, then the transmission efficiency of the subcarrier group is reduced by half. Whether or not to use subcarriers is determined according to the transmission performance of the subcarrier group to which the subcarriers belong.

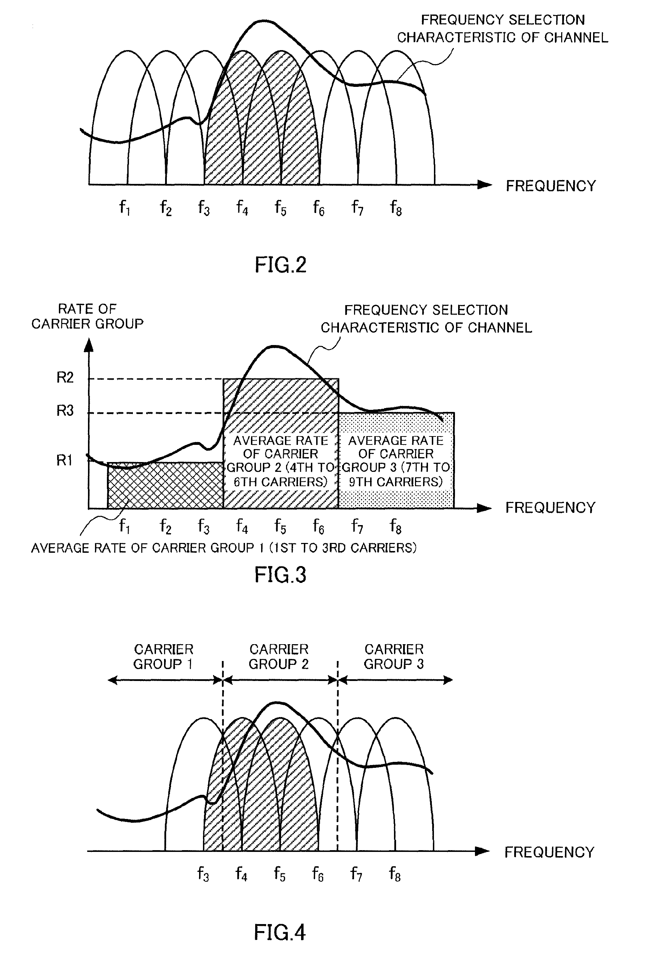

FIG.2 shows an influence of frequency selective fading on the transmission performance of thesubcarriers, and the bold line in the figure shows the frequency selection characteristic of the channel. In FIG.2, subcarriers f4 and f5 has good transmission performance. Subcarriers f3, f6, f7 and f8 have rather poor transmission performance. Subcarriers f1 and f2 have very poor transmission performance. If the carriers adopt the same transmission scheme in such a status, the information transmission efficiency becomes very low. To utilize a spectrum sufficiently and improve the efficiency of information transmission, it is proposed with the present invention to form subcarrier groups by combining a plurality of subcarriers, calculate SIR values of the subcarrier groups at the reception apparatus, control the transmission rates of the subcarrier groups based on the measured SIR values, adopt a high rate for a subcarrier group having a high SIR value, and transmit data by selecting all or most of the subcarriers in the group, or to adopt a low rate for a subcarrier group having a low SIR value, perform puncturing on the subcarriers in the group, transmit data by selecting the fewer number of subcarriers and avoid using the remaining subcarriers. By selecting and using a high data rate for subcarriers having good performance, and by selecting and using a low data rate for subcarriers having poor performance, it is possible to achieve an objective of effectively using a spectrum.

To use the transmission performance of subcarriers effectively, a plurality of subcarriers are grouped into one subcarrier group, and the transmission rate of the subcarrier group is adaptively adjusted based on rate control information of the subcarrier group fed back from the reception apparatus. For the classification of subcarriers, subcarriers are classified into groups in series per N subcarriers, and for selecting the number of subcarriers N in each groups, the following two methods are provided.

If the total number of carriers N is 64 and the number of groups M is 4, according to the first method, the number of subcarriers in each group is fixed in the entire process, the number of subcarriers K in each carrier group is equal, the first to 16th subcarriers are a first group, the 17th to 32nd subcarriers are a second group, the 33rd to 48th subcarriers are a third group and the 49th to 64th subcarriers are a fourth group, each group containing 16 subcarriers.

According to the second method, the number of subcarriers of each group is variable in the entire process, but the number of subcarriers in each group is equal and changes in the number of subcarriers can be determined according to the size of a Doppler shift f_{D} of the reception apparatus. When f_{D} is large, a fluctuation of the channel fading is quick, and the number of subcarriers K in the group therefore can be reduced. On the other hand, when f_{D} fed back is small, channel fading becomes slower, and the number of subcarriers K in the group therefore can be increased. For example, when 8 is selected as K when f_{D} is large, the number of groups is 8, and when 16 is selected as K when f_{D} is small, the number of groups is 4.

Although the first method can be easily implemented, the second method takes the influence of Doppler shift f_{D} into consideration, too, and is able to further improve the performance by adjusting the number of subcarriers in the group in real time based on a status of the channel. When, for example, f_{D} is small, the fluctuation of the channel is slow and a relatively large number of subcarriers K in the group can be selected, so that the number of groups M decreases, and the amount of feedback information of the reception apparatus decreases, thereby reducing the complexity of the processing on the feedback information. Also, when f_{D} is large, the fluctuation of the channel is quick and a relatively small number of subcarriers K in the group can be selected, so that the number of groups increases, and the amount of feedback information also increases. Subcarriers in the group are consequently selected more precisely, and the frequency utilization efficiency increases, so that the efficiency of the system improves. When the SIR performance of the subcarrier group is good, all subcarriers or most of subcarriers in the subcarrier group are available. However, when the subcarrier group performance is poor, puncturing is performed on subcarriers in the subject group based on the performance, and some of the subcarriers are selected to transmit data, without using the remaining subcarriers for data transmission. Puncturing information of all subcarriers is used for control of S/P conversion process.

The reception apparatus can calculate an SIR value of each subcarrier group based on a pilot signal inserted by the transmission apparatus, and, moreover, calculate rate control information of each subcarrier group based on these values. This control information includes the number of subcarriers to be used in the subcarrier group and subcarrier numbers to be used. When the SIR value of certain calculated subcarrier group is high, a high transmission rate is assigned to subcarriers of the aforementioned group, and, when the SIR value of the subcarrier group is low, a low transmission rate is assigned to the subcarriers of the aforementioned group. The information is fed back to the transmission apparatus so that the transmission apparatus can adjust the information rate of each subcarrier group and is also stored in the reception apparatus so as to perform corresponding control on the information to be received next. In this way, a high transmission rate can also be maintained in a channel of frequency selective fading.

Hereinafter, a preferred embodiment of the present invention will be explained in detail using the drawings. With the embodiments described below, the second method is adopted for selecting the number of subcarriers in a carrier group--that is, the method of fixing the number without difficulty.

FIG.3 illustrates transmission rate control of each carrier group on a frequency selection channel of the present invention. Assume that three subcarriers constitute one subcarrier group, and the reception apparatus calculates an SIR value of each subcarrier group based on pilot signals and determines a transmission rate of each subcarrier group based on the obtained SIR value. By feeding back the information to the transmission apparatus, the transmission rate of each subcarrier group is controlled. A high transmission rate is adopted for a subcarrier group having good channel performance, and a low transmission rate is adopted for a subcarrier group having poor channel performance. In FIG.3, the first to third subcarriers constitute one subcarrier group, and one transmission rate R1 is determined based on that transmission performance. Likewise, subcarriers 4, 5 and 6 constitute another subcarrier group. This subcarrier group has better transmission performance, transmission rate R2 is higher.

FIG.4 illustrates a selection status of subcarriers in the carrier group in the frequency selection channel of the present invention. To control the rate for the carrier group, the present invention adopts a method of performing puncturing on subcarriers in the carrier group. Subcarriers for performing data transmission are selected from a puncturing table. For example, if the number of carriers in the group is 4 and the puncturing table is found to be (1010) from the information fed back from the reception apparatus, the first and third subcarriers in the group are used for data transmission, and the second and fourth subcarriers are not used. The number of subcarriers to be selected is determined according to the SIR value of the subcarrier group obtained at the reception apparatus. When the SIR value is high, the number of selectable subcarriers increases, and, when the SIR value is not high, the number of selectable subcarriers decreases. A selection of subcarrier can be determined with reference to the statuses of the carrier groups on both sides. When the carrier groups on both sides have good performance, data can be transmitted by selecting more subcarriers on both sides. When the carrier groups on both sides have poor performance, a subcarrier may be selected from the middle, randomly, or alternately or every few subcarriers in a fixed manner. When the carrier group on one side has good performance and the carrier group on the other side has low performance, subcarriers closer to the carrier group having better performance are selected with high priority. In FIG.4, one subcarrier is selected from carrier group 1, three subcarriers are selected from carrier group 2, and two subcarriers are selected from carrier group 3.

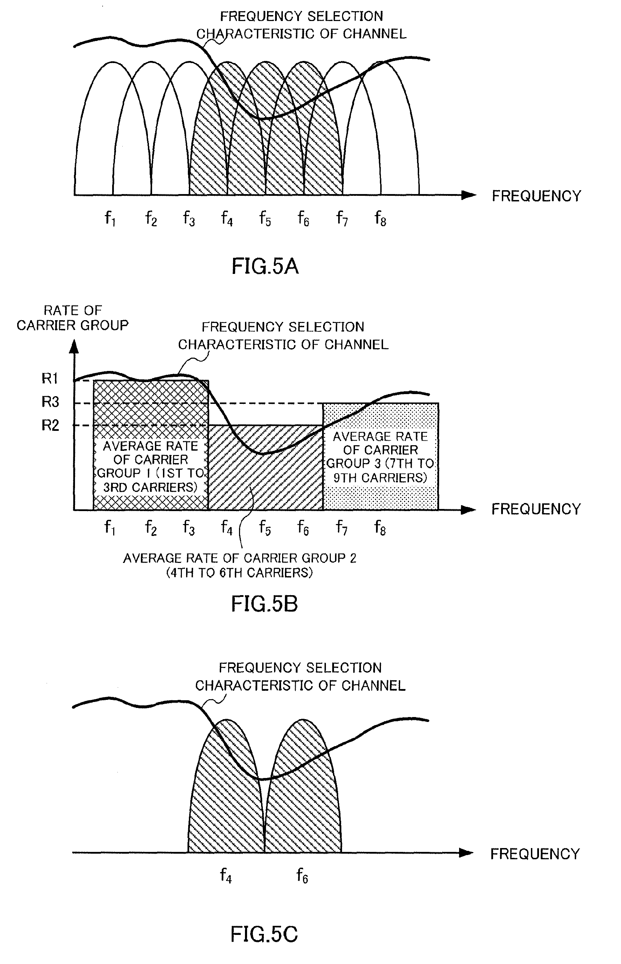

FIG.5A to FIG.5C show selection statuses of subcarriers of the present invention when carrier groups on both sides (carrier group 1 and carrier group 3) have good performance. Carriers (f1, f2, f3), (f4, f5, f6) and (f7, f8, f9) constitute three subcarrier groups (carrier group 1 to carrier group 3), respectively. When carrier group 2 (f4, f5, f6) (subcarrier group to be selected) is considered, it is possible to confirm from the level of the SIR value that two subcarriers in carrier group 2 can be selected to transmit data. Since it is understandable from the frequency selection characteristic of the channel in FIG.5A and FIG.5B that carrier groups 1, 3 on both sides of carrier group 2 have better performance, the two subcarriers (f4 and f6) on both sides of carrier group 2 are selected as shown in FIG.5C. Furthermore, the corresponding puncturing table is (101).

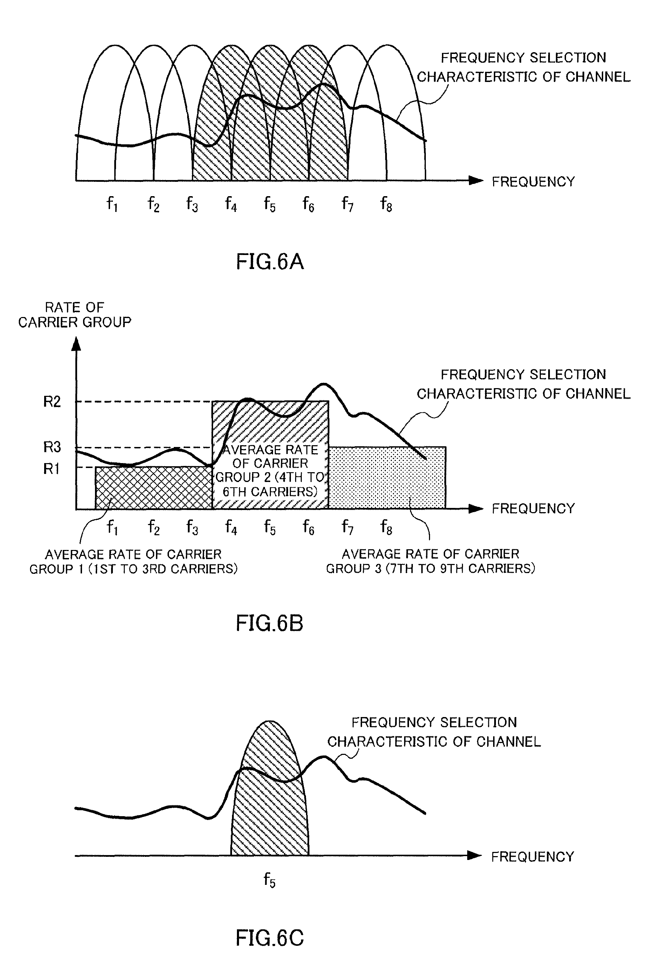

FIG.6A to FIG.6C show selection statuses of subcarriers of the present invention when carrier groups on both sides have low performance. Carriers (f1, f2, f3), (f4, f5, f6) and (f7, f8, f9) constitute three subcarrier groups. When carrier group 2 (f4, f5, f6) in the middle is considered, it is possible to confirm, from the level of the SIR value, that it is possible to select one subcarrier from carrier group 2 and transmit data. It is understandable from the frequency selection characteristic in FIG.6A and FIG.6B that carrier groups 1 and 3 onboth sides of carrier group 2 have low performance, so that, as shown in FIG.6C, it is possible to select subcarrier (f5) in the middle of carrier group 2. Furthermore, the corresponding puncturing table is (010) . Alternatively, it is also possible to select one subcarrier randomly or adopt a method of selection at fixed intervals.

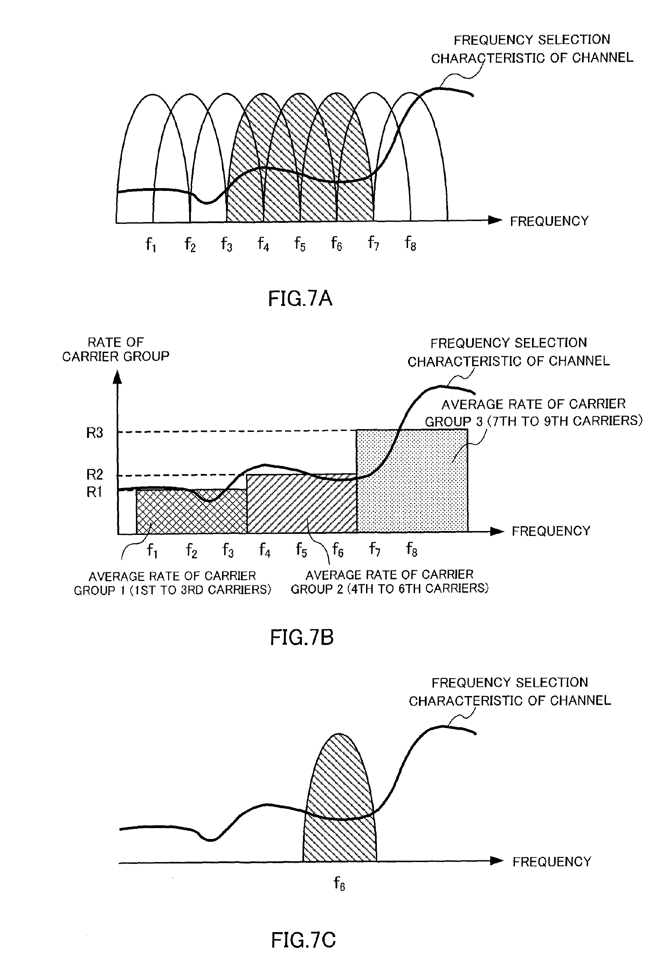

FIG.7A to FIG.7C show selection statuses of subcarriers of the present invention when a carrier group on one side has good performance. Carriers (f1, f2, f3), (f4, f5, f6) and (f7, f8, f9) constitute three subcarrier groups. When carrier group 2 in the middle (f4, f5, f6) (subcarrier group to be selected) is considered, it is possible to confirm, from the level the SIR value, that it is possible to select one subcarrier from carrier group 2 and transmit data. It is understood from the frequency selection characteristic in FIG.7A and FIG.7B that carrier group 3 (f7, f8, f9) on the right side of carrier group 2 has good performance, so that, as shown in FIG.7C, it is possible to select a subcarrier (f6) which is near carrier group 3 on the right side. Furthermore, the corresponding puncturing table is (001).

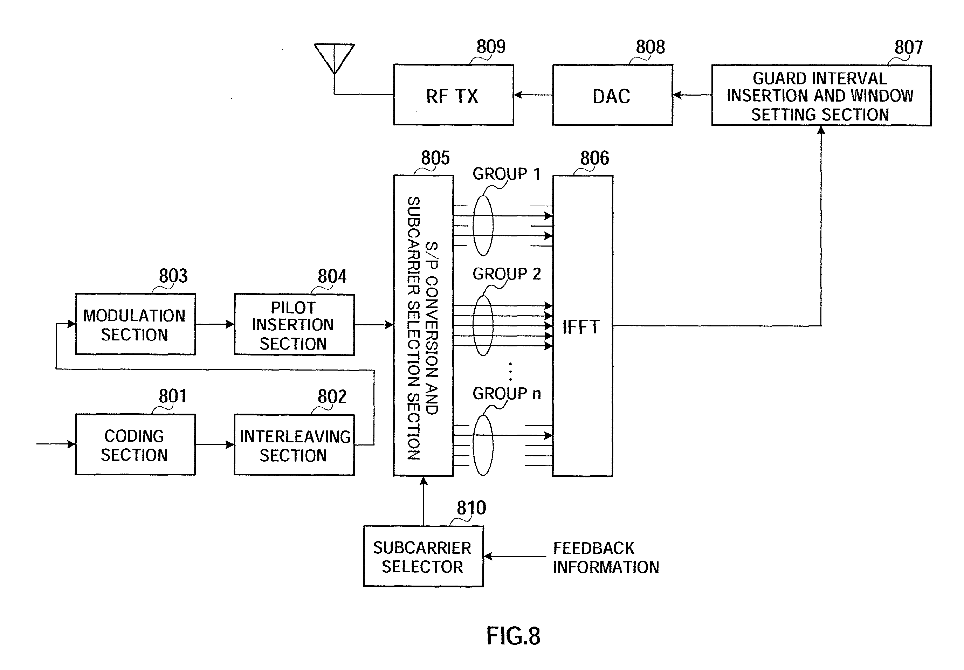

FIG. 8 is a block diagram showing the configuration of a transmission apparatus according to an OFDM system of the present invention. According to the present invention, the transmission apparatus includes: coding section 801; interleaving section 802; modulation section 803; pilot insertion section 804; S/P conversion and subcarrier selection section 805; IFFT section 806; guard interval insertion and window setting section 807; D/A converter (DAC) 808; transmitter (RFTX) 809; and subcarrier selector 810. With the present invention, to improve efficiency, a plurality of subcarriers are classified as one group and a transmission rate is controlled. Different transmission rates are assigned to different subcarrier groups based on a signal-to-interference transmission power radio.

In FIG.8, coding section 801 first codes original information. Here, coding is performed by inserting redundant information in the original information because the receiver overcomes the influence of interference and noise that the signal is subjected to during channel transmission process by means of the degree of redundancy. At present, coding schemes generally used include, for example, a turbo code and convolutional code.

Although the coded information is subjected to interleaving at interleaving section 802, the original transmission order of signals is changed through the interleaving and originally neighboring signals are distributed to different slots. Therefore, when a burst or depression occurs, the most important code positions from blocks in source bits are not interfered at the same time. Moreover, after the source bits are divided, it is possible to reduce the influence of interference of the channel on the source bits through error control coding.

The interleaved data is modulated at modulation section 803, and binary bit values are thereby mapped to constellation points and corresponding codes are formed. Furthermore, data can be modulated using a modulation scheme such as QPSK and 16QAM.

To perform channel estimation and performance calculation of a carrier group at the reception apparatus, the modulated data is input to pilot insertion section 804, and a signal where a pilot has been inserted is then input to S/P conversion and subcarrier selection section 805 (data assigning section). However, S/P conversion and subcarrier selection are performed under control of subcarrier selector 810. Subcarrier selector 810 receives rate control information of a subcarrier group fed back from the reception apparatus, and this information includes the number of carriers to be selected by the carrier groups and subcarrier numbers. Upon S/P conversion, when data is assigned to subcarriers selected for data transmission and transmission data is not assigned to unselected subcarriers, data is only assigned to the selected subcarriers after the S/P conversion.

Assume that each carrier group in FIG.8 includes five subcarriers. The first carrier group selects two subcarriers based on the transmission characteristic and does not assign data to the other subcarriers, and, therefore, these subcarriers are placed in a separated condition in the figure. The second carrier group has good transmission performance due to a high SIR value, and thus selects all the five subcarriers and transmits data. The nth carrier group selects only one subcarrier based on the transmission performance and transmits data and does not assign data to the other subcarriers, and, therefore, these subcarriers are placed in a separated condition.

All subcarriers after the S/P conversion are transmitted together to IFFT section 806. Subcarriers to which data is assigned at the S/P conversion are transmittedto IFFT section 806. IFFT section 806 inserts 0 in subcarriers to which data is not assigned. To prevent interference among subcarriers and avoid an influence on the orthogonality among subcarriers, it is necessary to insert a guard interval in the converted information and set a window.

The information where a guard interval inserted is then transmitted to D/Aconverter 808, and D/A converter 808 converts the signal from digital to analog format so as to be transmitted. Finally, transmitter 809 transmits the signal.

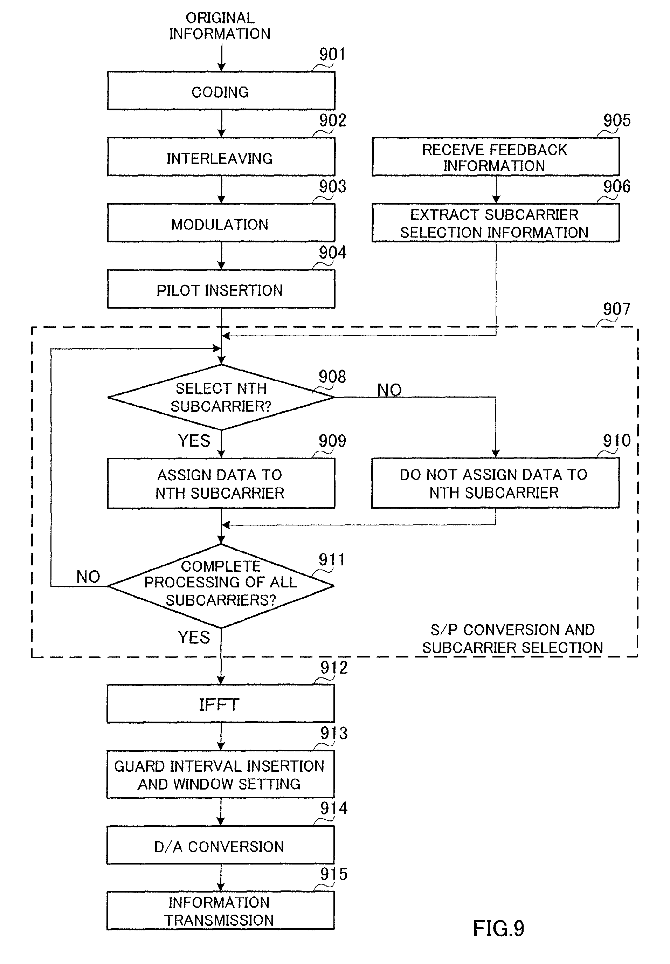

FIG.9 is a flow chart showing a transmission method at the OFDM system transmission apparatus according to the present invention. In FIG. 9, to perform an error correction on data at the reception apparatus, redundant information is inserted in the original information through coding (ST901) and subjected to interleaving so as to be resistant to burst interference and depression of the channel (ST902).

The inter leaved data is modulated (ST903), binary bit values are mapped to the constellation points and corresponding codes are formed. Pilots are then inserted so that the reception apparatus can perform channel estimation (ST904), and S/P conversion and subcarrier selection processes then start (ST907).

Before performing S/P conversion, subcarrier selection information of each carrier group needs to be extracted (ST906) from the subcarrier selection information fed back from the reception apparatus (ST905) and S/P conversion and subcarrier selection are then performed. When the S/P conversion is performed, data is assigned to different subcarriers based on the obtained subcarrier selection information. When processing on an Nth subcarrier is performed, if the subcarrier selection information returned from the reception apparatus indicates that the subject subcarrier is selected for data transmission (ST908), data is assigned to the subject subcarrier (ST909), and, if the subcarrier selection information returned from the reception apparatus does not indicate that the subject subcarrier is selected for data transmission, no data is assigned to the subcarrier (ST910). This process is repeated until processing on all the subcarriers is completed (ST911).

When the processing on all the subcarriers is completed, IFFT transform is performed (ST912). A guard interval is then inserted and a window is set so that the orthogonality among the subcarriers is not destroyed. Next, a D/Aconversion is performed (ST914) and the digital signal is converted to the analog signal. Then, in ST915, information is transmitted.

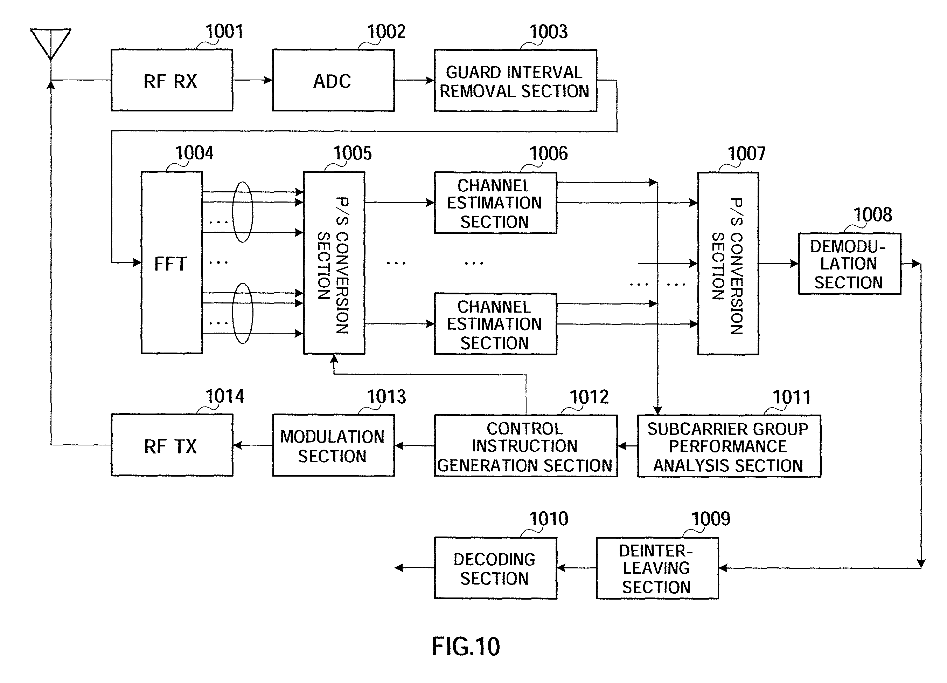

FIG.10 shows the configuration of the reception apparatus according to an OFDM system of the present invention. The reception apparatus includes: receiver (RFRX) 1001; A/D converter (ADC) 1002; guard interval removal section 1003; FFT section 1004; P/S conversion section 1005; a plurality of channel estimation sections 1006; P/S conversion section 1007; demodulation section 1008; deinterleaving section 1009; decoding section 1010; subcarrier group analyzer 1011; control instruction generation section 1012; modulation section 1013; and transmitter (RFTX) 1014.

In FIG. 10, when receiver 1001 receives a signal, it converts the signal from a radio frequency to a baseband frequency.

A/D converter 1002 converts the analog signal to the digital signal. Guard interval removal section 1003 removes a CP (Cyclic Prefix) added to maintain the orthogonality among subcarriers upon transmission and transmits the information to FFT section 1004. Although a plurality of subcarriers are formed after FFT, these subcarriers also include the subcarriers that do not transmit data due to poor transmission performance.

P/S conversion section 1005 performs the first P/S conversion on all the subcarriers and this P/S conversion is performed under control of control instruction generation section 1012. A control instruction includes subcarrier selection statuses in all the carrier groups. After the first P/S conversion, all the subcarriers that transmit data in the same carrier group are combined and subcarriers that do not transmit information are removed.

Then, channel estimation section 1006 performs channel estimation on the subcarrier groups and transmits the estimation results to subcarrier group analyzer 1011 and also uses the estimation results for channel compensation.

When the channel estimation is completed, the carrier group is input to P/S conversion section 1007 again and is combined into a 1-path signal.

The combined signal is demodulated by being transmitted to demodulation section 1008 and returned to the original binary signal. When these operations end, the signal is transmitted again to deinterleaving section 1009 and returned to the original signal sequence.

Decoding section 1010 performs decoding, corrects errors in the signal that can be corrected, removes redundant information and obtains the original data.

Furthermore, the information on the channel estimation is transmitted to subcarrier group performance analyzer 1011, and the analyzer calculates an SIR value of the subcarrier groups based on the estimation results.

The calculated SIR value is transmitted to control instruction generation section 1012 and control instruction generation section 1012 generates rates and puncturing information for the carrier groups. Control instruction generation section 1012 then stores the generated rates and puncturing information so that information received next is able to perform corresponding processing when S/P conversion section 1005 performs S/P conversion. Furthermore, the generated rates and puncturing information are fed back to the transmission apparatus by transmitter 1014 after modulation at modulation section 1013.

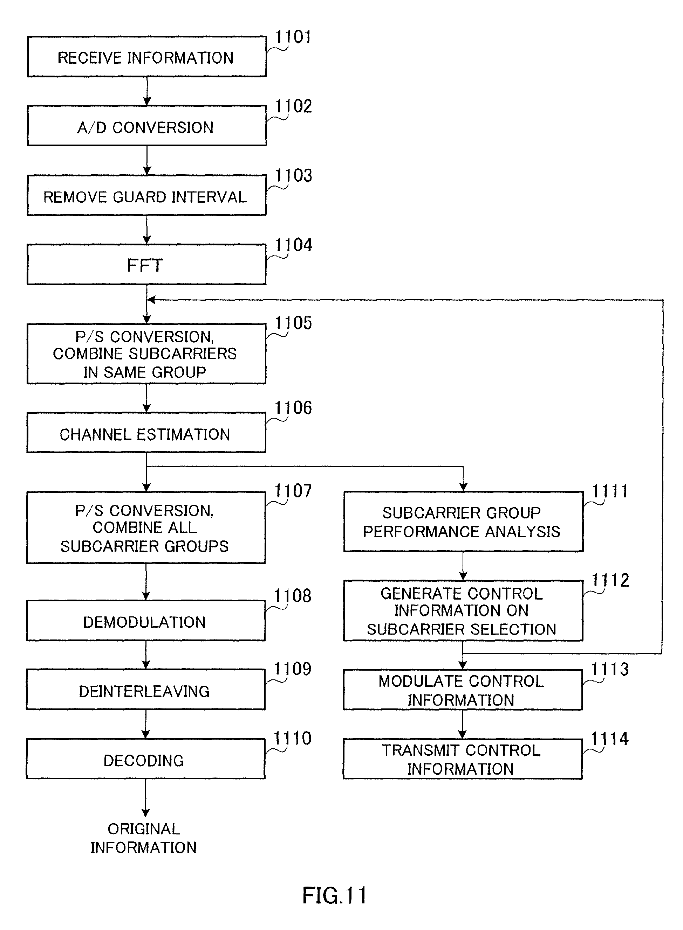

FIG.11 is a flow chart showing a reception method at the reception apparatus based on the OFDM system according to the present invention. In FIG.11, the reception apparatus first receives information transmitted from the transmission apparatus (ST1101), performs A/D conversion, and converts an analog signal to a digital signal (ST1102).

Then, the guard interval added at the transmission apparatus to maintain the orthogonality among subcarriers is removed from the digital signal obtained (ST1103) and then FFT is performed (ST1104).

A plurality of subcarriers formed after the FFT are subjected to the first P/S conversion in ST1105. The plurality of subcarriers in the same carrier group are combined and subjected to channel estimation based on pilot signals inserted in the signal (ST1106).

Performance of the subcarrier group is analyzed based on the channel estimation result (ST1111), and control information on the subcarrier selection is generated (ST1112). This control information includes a subcarrier grouping status in the next transmission obtained based on the channel estimation and information of subcarrier selection in the group. This information is used to control P/S conversion (ST1105) when the next signal is received. More specifically, this information is used, when P/S conversion is performed, to recognize the grouping status of the subcarrier group and recognize whether or not subcarriers in the group include data information. Furthermore, the control information is converted to a signal format that is easily transmitted after being modulated (ST1113) and, in ST1114, the control information is fed back to the transmission apparatus. By this means, it is possible to control the rate of the carrier groups of the transmission apparatus.

The signal after channel estimation is subjected to the second P/S conversion in ST1107, and the information of all the carrier groups is combined. The combined information is demodulated, restored to the original binary signal (ST1108), deinterleaved (ST1109) and returned to the original sequence of the signal. Finally, decoding is performed (ST1110) and original information is obtained.

The configuration of the OFDM communication system has been explained, and the present invention can also be applied to any subcarrier communication system that performs a signal communication using subcarriers.

Furthermore, although the present invention has been explained according to preferred embodiments, those skilled in the art can make various modifications, replacements and changes without departing from the spirit and the scope of the present invention. Therefore, the present invention is not limited to the above described embodiments.

### Industrial Applicability

The transmission apparatus, reception apparatus, communication system and communication method according to the present invention are suitable for adaptively controlling rates of subcarrier groups, for example, in a subcarrier communication system.

## Claims

1. A transmission apparatus comprising:
a subcarrier selection section that generates a subcarrier selection signal for each of subcarrier groups and outputs the signal based on received subcarrier selection feedback information;
a data assigning section that selects subcarriers necessary for each of the subcarrier groups based on the subcarrier selection signal of each of the subcarrier groups and assigns data to the selected subcarriers;
an inverse fast Fourier transform section that performs an inverse fast Fourier transform on the data assigned to each of the subcarriers at the data assigning section; and
a transmission section that transmits the data subjected to the inverse fast Fourier transform.

2. The transmission apparatus according to claim 1, wherein each of the subcarrier groups has an equal number of subcarriers.

3. The transmission apparatus according to claim 2, wherein the number of subcarriers in the subcarrier group is determined based on the size of a Doppler shift on a receiving side.

4. The transmission apparatus according to claim 1, wherein the subcarrier selection feedback information is a puncturing information table and the puncturing information table shows the number of available subcarriers and subcarrier numbers in each of the subcarrier groups.

5. A reception apparatus comprising:
a reception section that receives data;
a fast Fourier transform section that performs a fast Fourier transform on the data;
a first P/S conversion section that performs a first P/S conversion on the data after the fast Fourier transform based on a first P/S conversion control signal, combines subcarriers of all data in the same carrier group after the first P/S conversion, and outputs each of the subcarrier groups after the combination;
a plurality of channel estimation sections that perform channel estimation on each of the corresponding subcarrier groups after the first P/S conversion;
a subcarrier group analyzer that analyzes the channel estimation result and calculates an SIR value of each of the subcarrier groups;
a control instruction generation section that generates subcarrier selection feedback information based on the SIR value of each of the subcarrier groups and generates the first P/S conversion control signal based on the selection information on subcarriers of each of the subcarrier groups of the generated subcarrier selection feedback information; and
a transmission section that transmits the subcarrier selection feedback information.

6. The reception apparatus according to claim 5, further comprising a second P/S conversion section that performs a second P/S conversion on each of the subcarrier groups after the channel estimation and combines data of each of the subcarrier groups after the second P/S conversion with a 1-path data.

7. The reception apparatus according to claim 5, wherein each of the subcarrier groups has an equal number of subcarriers.

8. The reception apparatus according to claim 7, wherein the number of subcarriers in the subcarrier group is determined based on the size of a Doppler shift.

9. The reception apparatus according to claim 5, wherein the subcarrier selection feedback information is a puncturing information table and the puncturing information table shows the number of available subcarriers and subcarrier numbers in each of the subcarrier groups.

10. The reception apparatus according to claim 9, wherein, when the subcarrier selection feedback information is generated, the control instruction generation section sets the puncturing information table such that when an SIR value of the subcarrier group to be selected is greater than SIR values of subcarrier groups on both sides of the subcarrier group to be selected, an increased number of available subcarriers in the subcarrier group to be selected is set and at the same time available subcarrier numbers are determined based on the performance of the subcarrier groups on both sides, and when the SIR value of the subcarrier group to be selected is smaller than the SIR values of the subcarrier groups onboth sides of the subcarrier group to be selected, a decreased number of available subcarriers in the subcarrier group to be selected is set and at the same time available subcarrier numbers are determine based on the performance of the subcarrier groups on both sides.

11. The reception apparatus according to claim 10, wherein in the determination of available subcarrier numbers based on the performance of the subcarrier groups on both sides, when the SIR values of the subcarrier groups on both sides are smaller than the SIR value of the subcarrier group to be selected, the same number of available subcarriers as the determined available subcarriers are randomly selected within the subcarrier group to be selected and available subcarrier numbers are determined, and, when the SIR value of one of the subcarrier groups on both sides is greater than the SIR value of the subcarrier group to be selected, relatively more subcarriers in the subcarrier group to be selected at positions close to the subcarrier group which has the greater SIR value out of the subcarrier groups on both sides are selected, and the relatively fewer numbers of subcarriers in the subcarrier group to be selected at positions close to the subcarrier group which has a smaller SIR value out of the subcarrier groups on both sides are selected, and, when the SIR values of both subcarrier groups on both sides are greater than the SIR value of the subcarrier group to be selected, relatively more subcarriers in the subcarrier group to be selected at positions close to the subcarrier groups on both sides are selected and relatively fewer subcarriers at intermediate positions of the subcarrier group to be selected are selected or subcarriers in the subcarrier group to be selected are selected randomly or at fixed intervals.

12. A communication system comprising a transmission apparatus for transmitting a signal and a reception apparatus for receiving a signal,
the transmission apparatus comprising:
a subcarrier selection section that generates a subcarrier selection signal of each of the subcarrier groups and outputs the signal based on received subcarrier selection feedback information;
a data assigning section that selects subcarriers necessary for each of the subcarrier groups based on the subcarrier selection signal of each of the subcarrier groups and assigns data to the selected subcarriers;
an inverse fast Fourier transform section that performs an inverse fast Fourier transform on the data assigned to each of the subcarriers by the data assigning section; and
a transmission section that transmits the data subjected to the inverse fast Fourier transform, and
the reception apparatus comprising:
a reception section that receives data;
a fast Fourier transform section that performs a fast Fourier transform on the data;
a first P/S conversion section that performs a first P/S conversion on the data after the fast Fourier transform based on a first P/S conversion control signal, combines subcarriers of all data of the same carrier group after the first P/S conversion and outputs each of the subcarrier groups after the combination;
a plurality of channel estimation sections that perform channel estimation on each of the corresponding subcarrier groups after the first P/S conversion;
a subcarrier group analyzer that analyzes the channel estimation result and calculates an SIR value of each of the subcarrier groups;
a control instruction generation section that generates subcarrier selection feedback information based on the SIR value of each of the subcarrier groups and generates the first P/S conversion control signal based on the selection information on subcarriers of each of the subcarrier groups of the subcarrier selection feedback information generated; and
a transmission section that transmits a signal including the subcarrier selection feedback information.

13. The communication system according to claim 12, further comprising a second P/S conversion section that performs a second P/S conversion on each of the subcarrier groups after the channel estimation and combines data of each of the subcarrier groups after the second P/S conversion with a 1-path data.

14. A communication method comprising the steps of:
at a reception apparatus, receiving data;
performing a fast Fourier transform on the data;
performing a first P/S conversion on the data after the fast Fourier transform based on a first P/S conversion control signal,
combining subcarriers of all data of the same carrier group after the first P/S conversion and outputting each of the subcarrier groups after the combination;
performing channel estimation on each of the corresponding subcarrier groups after the first P/S conversion;
analyzing the channel estimation result and calculating an SIR value of each of the subcarrier groups;
generating subcarrier selection feedback information based on the SIRvalue of each of the subcarrier groups and generating the first P/S conversion control signal based on subcarrier selection information in the generated subcarrier selection feedback information for each of the subcarrier groups; and
transmitting the subcarrier selection feedback information, and
at a transmission apparatus, receiving the subcarrier selection feedback information;
generating a subcarrier selection signal of each of the subcarrier groups and outputting the signal based on the received subcarrier selection feedback information;
selecting subcarriers necessary for each of the subcarrier groups based on the subcarrier selection signal of each of the subcarrier groups and assigning data to the selected subcarriers;
applying an inverse fast Fourier transform to the data assigned to each of the subcarriers; and
at the transmission apparatus, transmitting the data subjected to the inverse fast Fourier transform.

15. The communication method according to claim 14, further comprising performing a second P/S conversion on each of the subcarrier groups after the channel estimation and combining data of each of the subcarrier groups after the second P/S conversion into a 1-path data.

16. The communication method according to claim 14, wherein each of the subcarrier groups has an equal number of subcarriers.

17. The communication method according to claim 16, wherein the number of subcarriers in the subcarrier group is determined based on the size of a Doppler shift.

18. The communication method according to claim 17, wherein the subcarrier selection feedback information is a puncturing information table and the puncturing information table shows the number of available subcarriers and subcarrier numbers in each of the subcarrier groups.

19. The communication method according to claim 18, wherein when generating the subcarrier selection feedback information, the puncturing information table is set such that when an SIR value of the subcarrier group to be selected is greater than SIR values of subcarrier groups on both sides of the subcarrier group to be selected, an increased number of available subcarriers in the subcarrier group to be selected is set and at the same time available subcarrier numbers are determined based on the performance of the subcarrier groups on both sides, and, when the SIR value of the subcarrier group to be selected is smaller than the SIR values of the subcarrier groups on both sides of the subcarrier group to be selected, a decreased number of available subcarriers in the subcarrier group to be selected is set and at the same time available subcarrier numbers are determine based on the performance of the subcarrier groups on both sides.

20. The communication method according to claim 19, wherein in the determination of available subcarrier numbers based on the performance of the subcarrier groups on both sides, when the SIR values of the subcarrier groups on both sides are smaller than the SIR value of the subcarrier group to be selected, the same number of available subcarriers as the determined available subcarriers are randomly selected within the subcarrier group to be selected and available subcarrier numbers are determined and when the SIR value of one of the subcarrier groups on both sides is greater than the SIR value of the subcarrier group to be selected, relatively more subcarriers in the subcarrier group to be selected at positions close to the subcarrier group which has the greater SIR value out of the subcarrier groups on both sides are selected, and relatively fewer subcarriers in the subcarrier group to be selected at positions close to the subcarrier group which has a smaller SIR value out of the subcarrier groups on both sides are selected, and when the SIR values of both subcarrier groups on both sides are greater than the SIR value of the subcarrier group to be selected, relatively more subcarriers in the subcarrier group to be selected at positions close to the subcarrier groups on both sides are selected and relatively fewer subcarriers at intermediate positions of the subcarrier group to be selected are selected or subcarriers in the subcarrier group to be selected are selected randomly or at fixed intervals.
